# EUROPÄISCHE PATENTSCHRIFT

(11) **EP 3 114 652 B1**
(45) Veröffentlichungstag und Bekanntmachung des Hinweises auf die Patenterteilung: **02.12.2020**
(21) Anmeldenummer: 15702211.2
(22) Anmeldetag: 26.01.2015
(51) Int. Cl.: G07C 5/00

(54) **ELEKTRONISCHE EINHEIT FÜR EINE FAHRZEUGKOMMUNIKATIONSSCHNITTSTELLE**
ELECTRONIC UNIT FOR A VEHICLE COMMUNICATION INTERFACE
MODULE ÉLECTRONIQUE POUR INTERFACE DE COMMUNICATION AVEC UN VÉHICULE

(30) Priorität: 06.03.2014 DE 102014204128
(43) Veröffentlichungstag der Anmeldung: 11.01.2017
(73) Patentinhaber: Robert Bosch GmbH, 70442 Stuttgart (DE)
(72) Erfinder: REICHARDT, Herbert, 73773 Aichwald (DE); GERN, Christian, 73249 Wernau (DE); DOEHREN, Stefan, 73630 Remshalden-Grunbach (DE); HOKENMAIER, Fabian, 73116 Waeschenbeuren (DE)
(86) Internationale Anmeldenummer: PCT/EP2015/051485
(87) Internationale Veröffentlichungsnummer: WO 2015/132017

(56) Entgegenhaltungen:
- EP-A1- 2 259 230
- EP-A1- 2 302 597
- US-A1- 2006 217 855
- US-A1- 2008 103 652

## Beschreibung

Die Erfindung betrifft eine elektronische Einheit für eine Fahrzeugkommunikationsschnittstelle und eine solche Fahrzeugkommunikationsschnittstelle.

### Stand der Technik

Eine Fahrzeugkommunikationsschnittstelle, die auch als VCI (Vehicle Communication Interface) bezeichnet wird, wird im Rahmen der Fahrzeugdiagnose eingesetzt. Darunter sind eine Reihe von technischen Verfahren und Anwendungen zu verstehen, die bspw. bei der Fehleranalyse bei Defekten, bei der Qualitätssicherung und bei der Fahrzeugentwicklung verwendet werden. Zum Datenaustausch mit dem Fahrzeug bzw. mit Komponenten im Fahrzeug werden Fahrzeugdiagnoseschnittstellen verwendet, die speziell für die Fahrzeugdiagnose ausgelegt sind. Diese Fahrzeugdiagnoseschnittstellen können unterschiedlich beschaffen sein. Es ist daher eine einheitliche Kommunikationsschnittstelle erforderlich, mit der die unterschiedlichen Fahrzeugdiagnoseschnittstellen angesteuert werden können.

Hierzu werden seit einigen Jahren als VCIs bezeichnete Fahrzeugkommunikationsschnittstellen verwendet, die als Schnittstelle zwischen mindestens einer Fahrzeugdiagnoseschnittstelle und einer Recheneinheit, bspw. einem PC (PC: Personal Computer), zum Einsatz kommen. Die Fahrzeugdiagnoseschnittstelle im Fahrzeug ist wiederum mit den im Fahrzeug verbauten Steuergeräten verbunden. Hierbei kommen unterschiedliche Schnittstellen, wie bspw. High Speed CAN, Fault Tolerant CAN, Single Wire CAN, J1850 oder OEM-spezifische Schnittstellen zum Einsatz. CAN (CAN: Controller Area Network) ist ein serielles Bussystem. Als OEM (OEM: Original Equipment Manufacturer) wird ein Erstausrüster benannt. Die Anschluss- bzw. Pin-Belegung der Fahrzeugdiagnoseschnittstelle ist dabei definiert.

Damit ist auch die Pin-Belegung am OBD-Stecker (OBD: On-board-Diagnose) im Fahrzeug definiert. Dennoch lässt die Schnittstellendefinition Optionen offen, die zu OEM-spezifischen Belegungen führen. Außerdem ist zu beachten, dass ältere Fahrzeuge ggf. über keinen OBD-Stecker, sondern über kundenspezifische Diagnosesteckverbinder verfügen.

Das VCI enthält unterschiedliche Sendeempfänger bzw. Transceiver und Con- troller, um die voranstehend genannten Protokolle zu unterstützen. Des Weiteren können die unterschiedlichen Pins der Transceiver über eine sogenannte Schalt- bzw. Switch-Matrix auf viele Pins des OBD-Steckers geschaltet werden. Über spezifische Adapterkabel lässt sich das VCI auch mit anderen OEM-spezifischen Diagnoseschnittstellen verbinden.

Es sind VCIs bekannt, die über einen Analog-Digital-Wandler bzw. ADC (ADC: Analog-to-Digital-Converter) verfügen, der u. a. die messtechnische Auswertung von Transceiver-Signalen ermöglicht. Damit können zusätzliche Diagnosefunktionen realisiert werden, bspw. eine Pegelüberprüfung von Signalen auf die korrekten High- und Low-Pegel. Ein High-Pegel ist in positiver Logik eine logische 1, ein Low-Pegel eine logische 0. Auf diese Weise ist eine weitreichendere bzw. tiefere Diagnose als mit der einfachen digitalen Auswertung der Transceiver-Signale möglich. Eine Früherkennung von hochohmigen Abschlusswiderständen oder Leitungen vor dem Totalausfall wird dadurch ebenso möglich.

Aus der Druckschrift EP 2259230 A1 ist beispielsweise ein programmierbares on-board Diagnosemodul für ein Fahrzeug bekannt, das ein elektronisches Konfigurationsarray umfasst. Letzteres umfasst selektive Verbindungsvorrichtungen, deren Betätigung zu einer Verbindung von Kommunikationspins eines Steuermoduls mit Verbindungspins eines Verbindungsanschlusses führt. Verschiedene Verbindungsarten zwischen den Pins sind dabei möglich. Die Pins sind für Datenempfang und -senden vorgesehen. Die Verbindungsvorrichtungen können Mikroschalter umfassen, die auf Befehl öffnen oder schließen. Der Konfigurationsarray ist als integrierter Schaltkreis (z.B. Mikrochip) ausgebildet. Jede der Verbindungsvorrichtungen ist normalerweise so geschaltet, dass eine Verbindung zwischen einem Kommunikationspin und einem oder mehreren Verbindungspins vorliegt. Ausgehend von diesem Schaltzustand wird in einer Öffnungsoperation die Verbindung zwischen den Pins unterbrochen.

Die Druckschrift EP 2 302 597 A1 offenbart ein programmierbares Fahrzeugdiagnosesystem mit einem Diagnosegerät an Bord des Fahrzeugs und konfiguriert zur Erzeugung von Fahrzeugdaten über einen Diagnosekonnektor mit mehreren Pins zum Zugriff auf die Daten. Ferner mit einem Onboard Diagnosemodul zum Sammeln der Fahrzeugdaten mit einem Konnektor, der mehrere Pins aufweist und eingerichtet ist, um in einer stabilen aber leicht entfernbaren Weise mit dem Diagnosekonnektor verbunden zu werden. Ferner einer Steuereinheit mit mehreren Terminals zum Austausch von Fahrzeugdaten mit den Pins des Konnektors. Ferner einer elektronischen Schaltmatrix mit mehreren selektiven Zwischenverbindungsgeräten, die jeweils zur Verbindung jedes Konnektorpins mit jedem der Terminals der Steuereinheit betrieben werden können. Ferner einem externen Programmiersystem, das zur Steuerung der selektiven Schaltung der Zwischenverbindungsgeräte der elektronischen Schaltmatrix über das Onboard Diagnosemodul konfiguriert ist.

Aus der US 2008/103652 A1 sind eine Vorrichtung und ein Verfahren bekannt, dieses einem Scan Tool ermöglichen, mit einem Datenverbindungskonnektor in einem Fahrzeug zu kommunizieren. Ein Kabel kann automatisch seine Verbindungen multiplexieren, um die geeigneten Verbindungen zwischen dem Scan Tool und dem Datenverbindungskonnektor basierend auf einem Kommunikationsprotokoll des getesteten Fahrzeugs herzustellen. Dies ermöglicht es dem Scan Tool mit dem Datenverbindungskonnektor zu kommunizieren ungeachtet der vom Kommunikationsprotokoll des Fahrzeugs verwendeten Pins.

Aus der US2006217855A1 ist ein Fahrzeugdiagnoseschnittstellenadapter als integrierter Schaltkreis bekannt, der ein Halbleitersubstrat mit zwei integralen Gateway Konduktoren umfasst. Ein Satz paarweiser Schalter auf dem Substrat verbindet beliebige zwei Kontakte eines ersten Kontaktsatzes mit den Gateway Konduktoren. Ein anderer Satz paarweiser Schalter auf dem Substrat verbindet die zwei Gateway Konduktoren mit einem beliebigen Paar eines zweiten Kontaktsatzes entsprechend einem besonderen Fahrzeugnetzwerkkommunikationsprotokollschaltkreis in einem Fahrzeugdiagnosegerät. Beide Schaltsätze werden von einem integrierten Schaltsteuermodul gesteuert.

Die Druckschrift US 2008/0004762 A1 beschreibt eine anwendungsspezifische integrierte Schaltung, die mit einem Fahrzeugdiagnosewerkzeug versehen ist. Die Schaltung umfasst ein Leistungsversorgungsmodul, eine Tastaturschnittstelle, einen Oszillator, einen Mikrocontroller, einen Datenverbindungscontroller, eine Fahrzeugschnittstelle, einen Anzeigecontroller und eine Speicherschnittstelle.

Aus der Druckschrift CN 102591326 A ist ein Schnittstellenbaustein für die Fahrzeugdiagnose bekannt. Dieser Baustein umfasst eine Schalt-Matrix, ein Bus-Transceiver-Modul, ein Auswahlmodul für serielle Dateneingabekanäle und ein internes Leistungsversorgungs-Schaltkreismodul.

Die Schnittstelle zwischen dem PC und dem VCI kann drahtgebunden ausgeführt sein, bspw. mit einer USB-Schnittstelle (USB: Universal Serial Bus), einer seriellen Schnittstelle, oder drahtlos, bspw. BT (BT: Bluetooth), WLAN (WLAN: Wireless Local Area Network), ZigBee, ein Industriestandard für Funknetze, oder mit anderen Funkstandards, ausgeführt sein. Die auf dem angeschlossenen PC installierte Anwendungs- bzw. Applikations-Software kann das VCI konfigurieren und ruft über das VCI z. B. Diagnoseinformationen aus den Steuergeräten im Fahrzeug ab.

Die heutigen VCIs verfügen dabei über eine diskret aufgebaute Schalt-Matrix sowie zum Teil diskret realisierte Transceiver. Grundsätzlich verfügen VCIs über weitere dargestellte Funktionsgruppen.

### Offenbarung der Erfindung

Vor diesem Hintergrund werden eine elektronische Einheit mit den Merkmalen des Anspruchs 1 und eine Fahrzeugkommunikationsschnittstelle, ein VCI, gemäß Anspruch 12 vorgestellt. Ausführungen ergeben sich aus den abhängigen Ansprüchen.

Die vorgestellte elektronische Einheit dient für eine Fahrzeugkommunikationsschnittstelle, welche für eine bidirektionale Kommunikation ausgelegt ist. Die elektronische Einheit umfasst eine Schalt-Matrix mit mindestens einem Schalter, der mit einem ersten Pin und einem zweiten Pin verbunden ist, wobei in einer ersten Kommunikationsrichtung der erste Pin sendet und der zweite Pin empfängt und in einer zweiten Kommunikationsrichtung der erste Pin empfängt und der zweite Pin sendet, wobei der mindestens eine Schalter dazu ausgelegt ist, beide Kommunikationsrichtungen gleichzeitig zu unterbrechen bzw. abzuschalten. Dabei ist die elektronische Einheit als integrierter Baustein ausgebildet. Wenigstens einer von dem mindestens einen Schalter kann als leckstromarmer Schalter ausgebildet sein. In einer Ausführung sind mehrere Schalter vorgesehen, die alle als leckstromarme Schalter ausgebildet sind. Weiterhin kann die elektronische Einheit ein Element zum Schalten des mindestens einen Schalters umfassen.

Ist nur ein Schalter vorgesehen, so ist die Schaltmatrix als 1x1-Matrix ausgebildet. Sind bspw. vier Schalter vorgesehen, so ist die Schaltmatrix als 2x2- oder auch als 4x1-Schaltmatrix ausgebildet. Es sind unterschiedliche Anzahlen von Schaltern und verschiedene Schaltmatrizen denkbar.

In einer Ausgestaltung ist die elektronische Einheit als anwendungsspezifische integrierte Schaltung bzw. als ASIC (ASIC: Application-Specific Integrated Circuit) ausgebildet sein. Die Verwendung eines ASICs ermöglicht eine auf die Anwendung ausgerichtete Struktur der elektronischen Einheit.

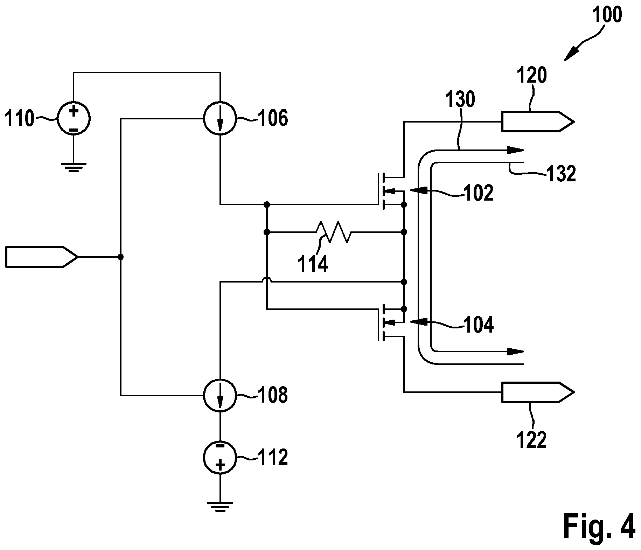

Wenigstens einer von dem mindestens einen Schalter der Schalt-Matrix ist bspw. als Back-to-Back-Schalterstruktur ausgebildet. Sind mehrere Schalter vorgesehen, so kann weigstens einer der Schalter als Back-to-Back-Schalterstruktur ausgebildet sein. In Ausgestaltung sind alle Schalter mit einer Back-to-Back-Schalterstruktur ausgebildet. Es wird hierzu auf Figur 4 verwiesen. Zu berücksichtigen ist, dass wenigstens einer von dem mindestens einen Schalter als leckstromarmer Schalter ausgebildet ist. Sind mehrere Schalter vorgesehen, so kann jeder Schalter als leckstromarmer Schalter ausgebildet sein.

Weiterhin kann eine Transceiver-Anordnung bzw. ein Transceiver-Array vorgesehen sein, das als Pegelwandler dient.

In einer weiteren Ausgestaltung ist eine zusätzliche Recheneinheit vorgesehen ist, die als Master in der elektronischen Einheit dient. Die Master-Funktion weist auf eine hierarchische Struktur innerhalb der elektronischen Einheit hin. Der Master kontrolliert die anderen Komponenten, die auch als Slaves bezeichnet werden. Anstelle der Recheneinheit kann auch ein programmierbarer integrierter Schaltkreis bzw. ein FPGA (FPGA: Field Programmable Gate Array) verwendet werden.

Es kann weiterhin zusätzlich eine weitere Kommunikationsschnittstelle vorgesehen sein, die u. a. zur Konfiguration der elektronischen Einheit dient.

Weiterhin kann zusätzlich ein Modul mit ADC vorgesehen sein, wobei der ADC mit einem Multiplexer zusammenwirkt, um unterschiedliche Fahrzeugbusse ansprechen zu können.

Es kann auch zusätzlich ein Modul mit ADC-Multiplexer vorgesehen sein, um die elektronische Einheit an unterschiedliche Fahrzeugbusse anzupassen. Bei dem Modul mit ADC-Multiplexer führt der Multiplexer mehrere Signale auf einen ADC-Eingang.

In einer weiteren Ausführungsform ist zusätzlich ein Überwachungsmodul vorgesehen, das zur Kontrolle des Masters dient.

Es kann außerdem zusätzlich eine Spannungsüberwachung vorgesehen sein, die zur Überwachung von externen Spannungen dient.

Es wird weiterhin eine Fahrzeugkommunikationsschnittstelle zum Anschließen an eine Fahrzeugdiagnoseschnittstelle vorgestellt, über die eine Fahrzeugdiagnose durchgeführt werden kann. Diese umfasst eine elektronische Einheit der vorstehend beschriebenen Art.

Die vorgestellte elektronische Einheit für eine Fahrzeugkommunikationsschnittstelle kann in einer Ausgestaltung somit folgende Blöcke bzw. Module umfassen:
- Schalt-Matrix mit Schalter, die in Ausgestaltung sehr geringe Leckströme aufweisen und für eine hohe Impedanz gestaltet sind und an eine präzise analoge Messeinrichtung angebunden sind, der Schalt-Matrixbetrieb ist für einen großen negativen und positiven Eingangsspannungsbereich ausgelegt, d. h. es ist die Möglichkeit gegeben, Kommunikationssignale auf verschiedene DLC-Pins (DLC: Data Link Connector) schalten zu können; damit können verschiedene herstellerspezifische Kommunikationsarten unterstützt werden,
- Transceiver-Anordnung, diese dient als Schnittstelle bzw. Interface, die bzw. das Controllersignale in protokollspezifische Signale wandelt und somit einen Pegelwandler darstellt,
- Kommunikationsschnittstelle mit Steuer- und Statusregister, diese dient zur Konfiguration der elektronischen Einheit, bspw. eines ASICs wie auch zur Diagnose, insbesondere zur Fehlerdiagnose, und zur Fehlerbehandlung,
- ADC mit Multiplexer, der ADC wird verwendet, um Diagnosen auf verschiedenen Fahrzeugbussen durchzuführen, damit kann jeder Pin bedient werden,
- Analog-Multiplexer, dieser ist vor dem ADC angeordnet, damit der ADC auf jeden DLC-Pin über den Multiplexer schalten kann, um Signal herunterzuteilen, den Spannungseingangsbereich bzw. Messbereich zu variiere, der ADC-Multiplexer ist deaktivierbar, um hochgenaue Spannungsmessungen zu ermöglichen,
- autonome Steuereinheit mit Zustandsmaschinen für ADC Messdatenverarbeitung zum Ausschalten bzw. Entlasten eines externen Sternverteilers bzw. MCU (MCU: Multipoint Control Unit), diese ist dazu ausgelegt, zyklisch, zeitsynchron oder auch winkelsynchron Spannungssignale auf DLC-Pins zu erfassen, weiterhin diese Steuereinheit eine Abtastung bzw. ein Sampling der ADC-Messwerte automatisch durch, es ist kein zusätzlicher Aufwand durch den Einsatz von Software erforderlich um dies zu triggern,
- DLC-Kommunikations-Puffer bzw. -Buffer, dieser dient der Zwischenspeicherung von Daten, insbesondere von ADC-Daten oder Kommunikationsdaten,
- Spannungsüberwachung von externen Spannungen, diese wird dazu eingesetzt, bei Spannungsunterschreitung den ASIC in den Grundzustand bzw. den default-Zustand zurückzusetzen, dabei werden die Schalter auf dem SPI-Register zurückgesetzt,
- Rücksetz-Verarbeitung mit einem sogenannten Rücksetz- bzw. Reset-Modul, mit diesem wird eine Systemspannung des VCI überwacht, bei Unterschreitung wird ein RESET generiert, dies kann auf FPGA geführt werden, das den VCI wiederum zurücksetzt,
- Überwachungseinheit, diese ermöglicht es, durch ein zyklisches Frage-Antwort Spiel die Funktion des Masters, eines Rechner oder FPGA, im Gesamtsystem zu verifizieren, es besteht eine Verbindung zur Rücksetzverarbeitung, diese wird bei Überschreiten eines Fehlerzählers getriggert.

Die vorgestellte Hardware stellt eine rückwärtskompatible Lösung für bereits verfügbare diskrete Realisierung der voranstehend genannten Hardware-Module dar.

Die vorgestellte elektronische Einheit im VCI, die bspw. in einem ASIC implementiert ist, kann vielfältig verwendet werden. Neben der analogen Spannungsmessung, die eine umfangreiche Diagnose des Bussystems ermöglicht, eröffnet die elektronische Einheit bzw. das VCI-ASIC folgende Potentiale bzw. Möglichkeiten und umfasst folgende Funktionalitäten:
1. Darstellung einer kostengünstigen Hardware-Lösung für VCIs durch Reduzierung des Leiterplattenflächenbedarfs.
2. Das VCI-ASIC unterstützt eine parallele Kommunikation. Das bedeutet, dass viele unterschiedliche Fahrzeugschnittstellen parallel über den OBD-Stecker bedient werden können. Diese Funktionalität unterstützt schnellere Fahrzeugdiagnosezeiten sowie Programmierzeiten.
3. Eine weitere hervorzuhebende Funktionalität ist die Integration einer Messtechnikfunktionalität in dem System-ASIC. Mit dieser Messtechnik kann eine analoge Messung von externen Signalen, z. B. CAN-Signalen, erfolgen.
4. Ein weiteres Merkmal des VCI-ASICs besteht darin, dass digitale Sensoren und Aktoren über das Messtechnikmodul diagnostiziert werden können.
5. Ein weiteres Merkmal ist die verfügbare Abdeckung des ASICs, um über die OBD-spezifizierten Diagnosemöglichkeiten hinaus alle bisher bekannten Diagnosemöglichkeiten aller Fahrzeuge aller Hersteller abzudecken.
6. Die bisher bekannten ASIC-Lösungen verarbeiten nur negative Eingangssignale bis -2 V, das vorgestellte VCI-ASIC verarbeitet negative Spannungen bis zur vollen CAN-Konformität. CAN-Konformität bedeutet dabei die Einhaltung einer Norm, die zwei Schichten, nämlich die physikalische Schicht bzw. physical layer und die Protokollschicht bzw. protocol layer, des OSI-Schichtenmodells der verwendeten Netzwerkprotokolle beschreibt. Das OSI-Schichtenmodell (OSI: Open Systems Interconnection Model) ist ein Referenzmodell für Netzwerkprotokolle als Schichtenarchitektur. Das OSI-Schichtenmodell ermöglicht eine Kommunikation über unterschiedliche technische Systeme hinweg. Hierzu definiert das Modell sieben aufeinanderfolgende Schichten, denen jeweils eng begrenzte Aufgaben zugeordnet sind.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnungen

- Figur 1: zeigt in Übersichtsdarstellung ein Systemblockschaltbild.
- Figur 2: zeigt eine Ausführungsform der vorgestellten Fahrzeugkommunikationsschnittstelle.
- Figur 3: zeigt eine Ausführungsform eines VCI-ASIC, der als elektronische Einheit dient.
- Figur 4: zeigt eine Back-to-Back Schalterstruktur.
- Figur 5: zeigt in einem Blockschaltbild einen ADC und einen ADC-Multiplexer.
- Figur 6: zeigt in einem Blockschaltbild einen DLC-SPI-Buffer (DLC: data link control; SPI: Serial Peripheral Interface)
- Figur 7: zeigt mögliche Konfigurationen der Fahrzeugkommunikationsschnittstelle.

### Ausführungsformen der Erfindung

Die Erfindung ist anhand von Ausführungsformen in den Zeichnungen schematisch dargestellt und wird nachfolgend unter Bezugnahme auf die Zeichnungen ausführlich beschrieben.

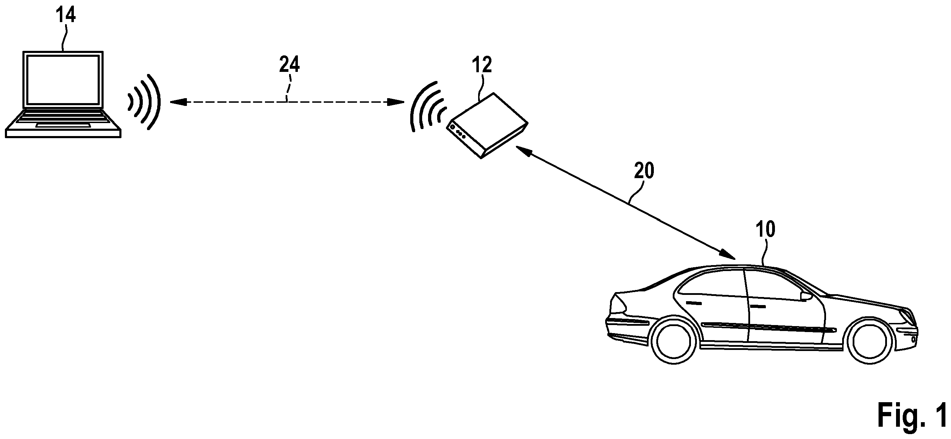

Figur 1 zeigt ein typisches Systemblockschaltbild zur Verdeutlichung der Durchführung einer Fahrzeugdiagnose. Die Darstellung zeigt ein Fahrzeug 10, eine Fahrzeugkommunikationsschnittstelle 12, die hierin auch als VCI bezeichnet wird, sowie eine externe Recheneinheit 14, typischerweise einen PC.

Mit dem VCI 12 können im Rahmen einer On-board-Diagnose 20 Daten mit den Fahrzeug 10 ausgetauscht werden, wobei unterschiedliche Fahrzeugdiagnoseschnittstellen verwendet werden. Daten werden aus dem Fahrzeug 10 ausgelesen. Das VCI 12 sendet diese Daten weiter an die Recheneinheit 14, in der diese ausgewertet werden. Zum Übertragen der Daten zwischen VCI 12 und Recheneinheit 14 kommt typischerweise eine Schnittstelle 24, bspw. USB oder WiFi, zum Einsatz. Die Recheneinheit 14 kann aber auch im Gesamtsystem, bspw. als eingebettetes bzw. embedded Gerät, integriert sein.

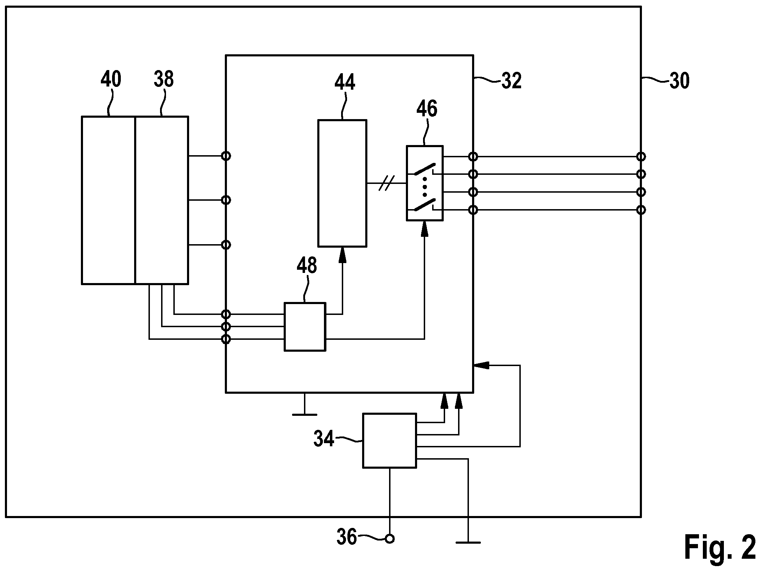

Figur 2 zeigt den Aufbau und die Funktion der vorgestellten Fahrzeugkommunikationsschnittstelle mit einem integrierten ASIC, der als elektronische Einheit der beschriebenen Art dient.

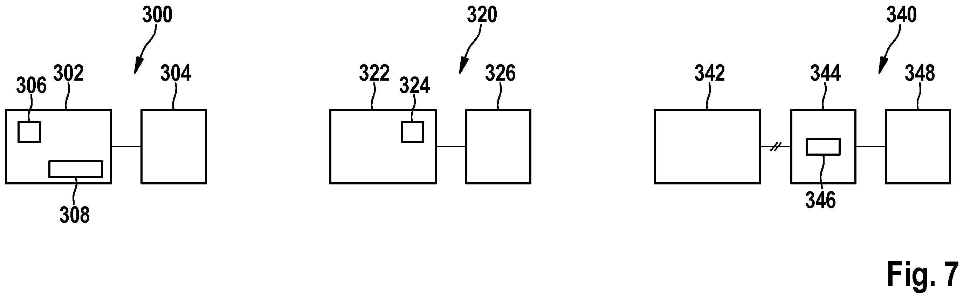

Die Darstellung zeigt in einem stark vereinfachten Blockschaltbild eine Fahrzeugkommunikationsschnittstelle 30, die nachstehend auch als VCI bezeichnet wird. In dieser Fahrzeugkommunikationsschnittstelle 30 ist eine elektronische Einheit 32 vorgesehen, die typischerweise als ASIC ausgebildet ist. Weiterhin ist in der Fahrzeugkommunikationsschnittstelle 30 eine Leistungsversorgungseinheit 34 vorgesehen, die mit einer externen Batterie 36, die bspw. 12 V Versorgungsspannung liefert, verbunden ist und unterschiedliche Versorgungsspannungen, bspw. 5 V, 10 V und 3,3 V, bereitstellt. Weiterhin sind ein Schnittstellen-Controller 38 und/oder ein Mikrocontroller 40, der in einem FPGA implementiert sein kann, vorgesehen. Der Mikrocontroller 40 und der Schnittstellen-Controller 38 können auch als sogenannte Stand-Alone Devices vorhanden sein. Mögliche Konfigurationen sind in Figur 7 gezeigt.

In der elektronischen Einheit sind ein Transceiver-Array 44, eine Schalt-Matrix 46 und eine Kommunikationsschnittstelle 48 mit Steuer- und Status-Register vorgesehen. Das Transceiver-Array 44 und die Kommunikationsschnittstelle 48 bzw. die Schalt-Matrix 46 und die Kommunikationsschnittstelle 48 können in einer separaten elektronischen Einheit vorgesehen sein.

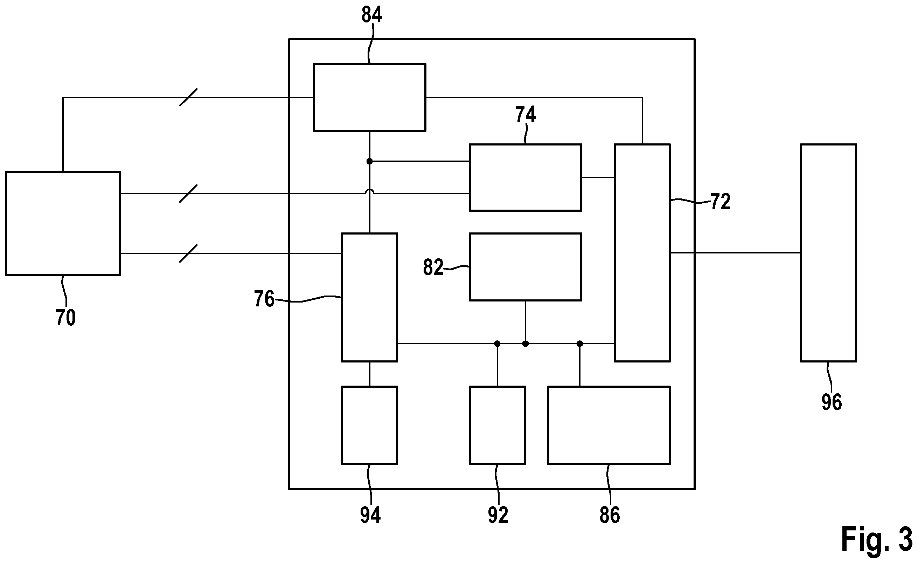

Die elektronische Einheit 32 aus Figur 2, die auch als VCI-ASIC bezeichnet wird, kann modular aufgebaut sein und über die in Figur 3 dargestellten Modulen verfügen. Figur 3 zeigt eine Ausführung der elektronischen Einheit mit einer Recheneinheit 70, wobei alternativ ein FPGA bzw. ein FPGA, das zwischen der Recheneinheit 70 und dem VCI-ASIC angeordnet ist, vorgesehen sein kann, einer Schalt-Matrix 72, einem Transceiver-Array 74, einem Steuer/Status-Register 76, einem ADC mit ADC-Multiplexer 82, einem DLC-Kommunikations-Buffer 84, einer Spannungsüberwachung 86, einem Block 92 für die Rücksetz-Verarbeitung, einem Überwachungsmodul 94 und einem DLC-Anschluss 96 (DLC: diagnostic link connector).

Im Folgenden werden die Module anhand ihrer Funktionalitäten näher erläutert.

### Schalt-Matrix und Transceiver-Array

Die zentralen Elemente des VCI-ASICs sind in Ausgestaltung die Schalt-Matrix und das Transceiver-Array. Die Schalt-Matrix unterstützt eine parallele Kommunikation und ist derart gestaltet, dass die Ausgangsschnittstelle zum OBD-Stecker robust gegen Spannungsverpolung und Überspannung sowie gegenüber hohen Spitzen- bzw. Peakspannungen ausgelegt ist. Die Schalt-Matrix ist in verschiedene Schalt-Gruppen unterteilt, die unterschiedliche Anforderungen hinsichtlich der Spannungsfähigkeit, Eingangs- und Durchgangskapazität sowie Durchgangswiderstand unterstützen. Zudem unterstützt die Schalt-Matrix DolP (Diagnosis over IP) bspw. mittels Ethernet-Schnittstelle im Fahrzeug.

Ein in einer Ausführung wichtiges Merkmal ist der Aufbau der Schalter, die sehr speziell und aufwendig gestaltet sind, so dass es möglich ist, die Messtechnik mit und ohne aktive Kommunikation mit dem Fahrzeug an jedem Pin, einzeln oder parallel, aufzuschalten. Diese Option ist derzeit mit gewöhnlich diskret aufgebauten Schaltern nicht möglich und bedarf größere spezielle optische Schalter und Relais mit verbundenem höheren Platzbedarf und höheren Kosten. Hintergrund sind die für die Messtechnik benötigten leckstromarmen Schalter, damit es zu keinen Spannungsmessungen mit einem großen Messfehler am ADC kommen kann. Die speziellen ASIC-Schalter sind neu entwickelte Schalter, abgeleitet aus bisher bekannten ASIC-Schaltern aus dem Medizinbereich, mit äußerst kleinen Leckströmen und dem zusätzlich benötigten negativen Spannungsbereich für die Fahrzeugdiagnose.

Es kann eine Diagnose per Kommunikation nicht nur über die üblichen Standard-Transceiver mit dem Fahrzeug durchgeführt werden, sondern auch die Kommunikation selbst per Messtechnik diagnostiziert werden, um Hardware-Fehler innerhalb dieser Diagnoseschnittstelle zu erkennen und genauer zu diagnostizieren. Dazu wird der hierin beschriebene ADC mit Multiplexer im Zusammenspiel mit der Schalt-Matrix und dem Transceiver-Array verwendet.

Es wird eine interne programmierbare Zustandsmaschine bzw. statemachine verwendet, um die Spannungen an DLC-Pins zyklisch messen zu können. Folgende Fehlerfälle können dabei über die Spannungsmessung mit dem ADC diagnostiziert werden:
- Kurzschluss nach Fahrzeugmasse oder zu einer anderen Spannungsquelle im Kabelbaum des Fahrzeugs,
- Lastabfall bzw. Open Load in der Zuleitung des VCIs zum Fahrzeug,
- Open Load am externen Kabelbaum des Fahrzeugs,
- genaue analoge Messung der High- und Low Pegel von Signalen während der Kommunikation, um Über- bzw. Unterschreitungen der zulässigen Grenzen zu erkennen.

Für die Open-Load-Messungen mit einer integrierten Messtechnik sind hohe Eingangswiderstände der ADC-Messschaltung notwendig. Ein Leckstrom der Schalter in der Switch-Matrix von bspw. 1 µA würde über diesem Widerstand eine Messwertverfälschung von 1 V verursachen. Das ist für die Open-Load-Diagnose nicht verwendbar. Es ist eine sehr viel höhere Genauigkeit vom Messbereichsendwert erforderlich.

Somit ist diese Open-Load-Diagnose nur möglich, wenn neben dem hohen Ausgangswiderstand des ASICs dieser über sehr kleine Leckströme, nämlich wenige nA, bei geöffneten oder geschlossenen Schaltern in der Schalt-Matrix verfügt. Der Schalter besteht bspw. aus einer Back-to-Back Schalterstruktur mit zwei MOSFETs, wie dies in Figur 4 dargestellt ist. Derartige Schalter sind in beide Richtungen abschaltbar, es bildet sich ein parasitärer Strompfad.

Figur 4 zeigt eine Back-to-Back-Schalterstruktur mit zwei MOSFETs, die insgesamt mit der Bezugsziffer 100 bezeichnet ist. Diese umfasst einen ersten MOSFET 102 und einen zweiten MOSFET 104, eine erste geschaltete Stromquelle 106, eine zweite geschaltete Stromquelle 108, eine erste Spannungsquelle 110 und eine zweite Spannungsquelle 112. Weiterhin sind ein erster Pin 120 und ein zweiter Pin 122 dargestellt. Eine Kommunikation kann bidirektion, d. h. in beide Richtungen, erfolgen. Dies bedeutet dass sowohl der erste Pin 120, empfangen und senden kann und bspw. mit DLC-Pins verdrahtet ist als auch der zweite Pin 122 senden und empfangen kann und typischerweise im ASIC weitergeführt wird. Dieser kann dann auf weitere interne Schalter oder auf einen Transceiver geführt werden. Es sind somit zwei Kommunikationsrichtungen möglich. In einer ersten Kommunikationsrichtung 130 sendet der erste Pin 120 und der zweite Pin 122 empfängt, in einer zweiten Kommunikationsrichtung 132 empfängt der erste Pin 120 und der zweite Pin 122 sendet. Die Back-to-Back-Schalterstruktur 100 ermöglicht es nun, beide Kommunikationsrichtungen 130 und 132 wahlweise zu ermöglichen und zu einem Zeitpunkt auch beide Kommunikationsrichtungen 130 und 132 abzuschalten, d. h. den Signalfluss in beide Kommunikationsrichtungen 130 und 132 zu unterdrücken bzw. zu deaktivieren. Die Schalterstruktur 100 ist ein Beispiel für einen Schalter, wobei gemäß Anspruch 1 mindestens ein Schalter vorgesehen ist. Ist ein Element zum Schalten dieses Schalters vorgesehen, so kann dieses, wenn der Schalter, wie bei der beschriebenen Ausführungsform als Back-to-Back-Schalterstruktur 100 mit den beiden MOSFETs 102 und 104 ausgebildet ist, eine Element sein, bspw. eine Logik, die die beiden MOSFETs 102 und 104 regelmäßig getrennt ansteuert, bspw. mit einem Hoch- bzw. High-Pegel oder einem Niedrig- bzw. Low-Pegel. Das Element kann die MOSFETs getrennt voneinander ansteuern, d. h. diese mit unterschiedlichen Signalen ansteuern. So können beide Kommunikationsrichtungen 130 und 132 wahlweise ermöglicht werden oder auch beide deaktiviert werden.

Der minimierte Leckstrom wird durch den Einsatz einer speziellen Gate-Source-Ansteuerung erreicht. Diese spezielle Ansteuerung zeichnet sich dadurch aus, dass mit einer nicht massebezogenen Spannungs- oder Stromquelle angesteuert wird. Im eingeschalteten Zustand besteht bspw. diese aus den zwei geschalteten Stromquellen 108, 110, die den Strom durch einen Gate-Source-Widerstand 114 gegenseitig kompensieren, so dass kein Fehlerstrom über die Back-to-Back Schalterstruktur 100 mit den beiden MOSFETs 102, 104 fließt. Im ausgeschalteten Zustand wird die Back-to-Back Schalterstruktur durch den Gate-Source-Widerstand 114 hochohmig gesperrt.

Nachfolgend wird auf die Kommunikationsschnittstelle mit Steuer- und StatusRegister eingegangen:
Über eine Kommunikationsschnittstelle wird der ASIC konfiguriert und angesteuert. Zudem ist über die Schnittstelle eine Diagnose möglich. Ebenso können Messwerte der integrierten Messtechnik, ADC mit Multiplexer und Messdaten-Aufbereitung, erhalten werden.

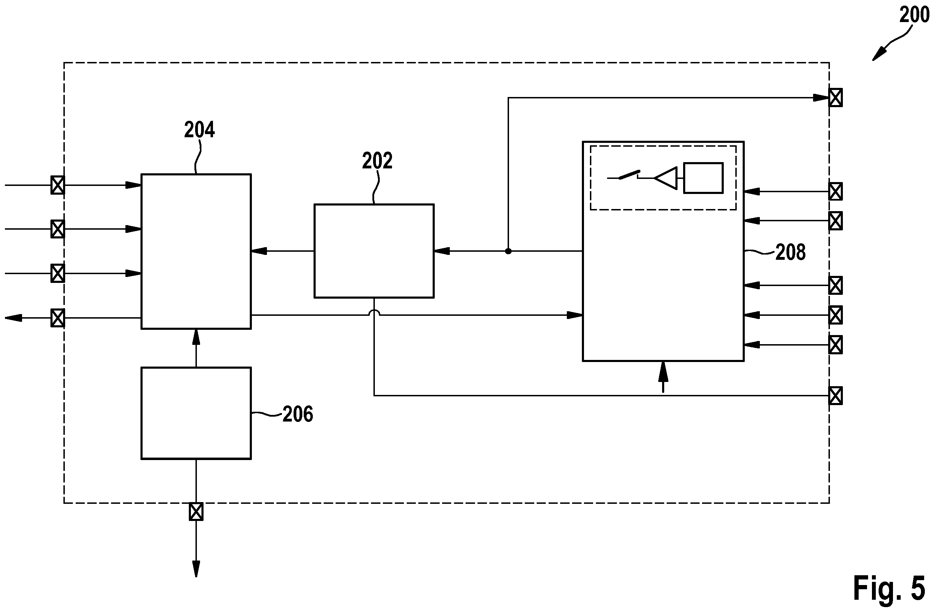

Figur 5 zeigt ein Modul mit ADC und ADC-Multiplexer, das insgesamt mit der Bezugsziffer 200 bezeichnet ist. Die Darstellung zeigt einen ADC 202, eine Steuerlogik 204, einen Referenzspannungsausgang 206 und einen ADC-Multiplexer 208, der in diesem Fall 32 Kanäle umfasst. Der ADC 202 kann auch extern realisiert sein. In diesem Fall wäre dann lediglich der Multiplexer im ASIC realisiert.

Der ADC 202 unterstützt die Messung von Transceiver-Spannungssignalen sowie die Messung von externen Spannungssignalen, wie z. B. von Sensoren und Aktoren.

Des Weiteren sollen Signale von digitalen Sensoren analysiert und ausgewertet werden können. Die Auswertung digitaler Sensorsignale im VCI-ASIC spart somit Rechnerressourcen und somit Kosten. Dieser integrierte Funktionsblock kann ein Alleinstellungsmerkmal darstellen. Der Multiplexer unterstützt derzeit eine Vielzahl von analogen und digitalen Eingängen.

Grundleistungsmerkmale des ADC 202 bei dieser Ausführung sind:
- mindestens 8-Bit Auflösung,
- ADC-Eingangsspannung mit einer Referenzspannung,
- minimale Abtastrate 10 ks/s,

Grundleistungsmerkamle des Multiplexer 208 bei dieser Ausführung sind:
- n/1 Multiplexer,
- gepufferter Spannungsteiler mit einer Anzahl Eingangsinputs mit Anpassung des Spannungsbereichs und einer Toleranz von mindestens kleiner als 1 %,

Grundleistungsmerkmale für den Referenzspannungsausgang 206 bei dieser Ausführung sind:
- etwa 5 V,
- Toleranz: +- 1%,
- Ausgangsstrom 1 mA.

Die Messtechnik-Verarbeitungseinheit 204 speichert über einen eingestellten Zeitbereich für jeden Kanal jeweils den aufgetretenen Maximal-, Minimal- und Durchschnittswert. Ebenso kann unabhängig davon der aktuelle Messwert von jedem Kanal ausgelesen werden.

Zusätzlich zur eingebauten Messtechnik-Verarbeitungseinheit bietet das ASIC Ausgänge für eine externe Messtechnik, mit der es möglich ist, die Kommunikation mit einer höheren Auflösung zu diagnostizieren, bspw. mit Oszilliskop-Funktionen. So können z. B. CAN-Kurven bzw. Nachrichten detaillierter dargestellt werden.

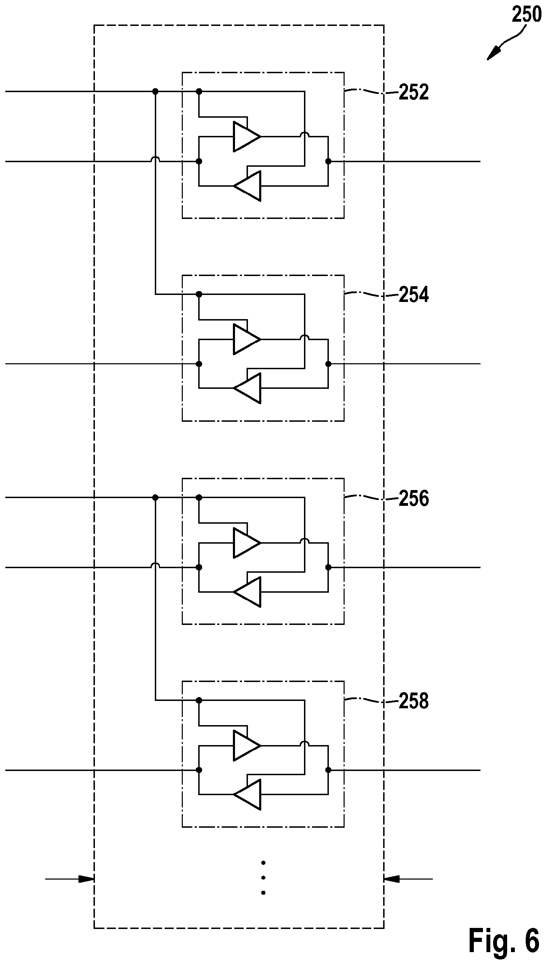

Figur 6 zeigt ein DLC-Kommunikations-Buffer-Modul, das insgesamt mit dem Bezugszeichen 250 bezeichnet ist. Dieses Modul 250 stellt lediglich eine Schnittstelle dar, um den Kommunikations-Bus des ASICs auf externe Komponenten zu führen. Die Darstellung zeigt einen ersten Transceiver 252, einen zweiten Transceiver 254, einen dritten Transceiver 256 und einen vierten Transceiver 258. Die Transceiver 252 bis 258 sind identisch aufgebaut. Es handelt sich um reine Pegelumsetzer mit extern einstellbaren Schaltpegeln. Es können je nach Ausführung des Kommunikations-Busses noch mehrere Transceiver im Modul 250 enthalten sein.

Nachstehend wird auf die Rücksetz-Verarbeitung und Überwachung eingegangen:
Das VCI-ASIC verfügt zudem über eine interne Rücksetz-Verarbeitung bzw. einen internen Reset Handler, die externe Versorgungsspannungen des gesamten VCI überwacht. Bei einer Unterschreitung oder Überschreitung von Grenzwerten für verschiedene Versorgungsspannungen werden RESET-Signale aktiviert, welche das System in einem sicheren Zustand halten. Auch verfügt das VCI-ASIC über ein Überwachungsmodul bzw. Monitoring Modul, welches den Rechnerkern oder ein FPGA überwachen kann. Im Rahmen der Überwachung dient das Überwachungsmodul als eine Art Master, bspw. eine Recheneinheit oder ein FPGA, der das VCI kontrolliert. Dies erfolgt bspw. durch ein Frage-Antwort-Spiel. Weiterhin besteht eine Verbindung zum Reset-Modul, um ggf. ein Rücksetzen auszulösen. Die Funktionalität des Monitoring-Moduls ist wie folgt:
- Überwachung kann über ein Kommando aktiviert werden,
- Überwachung arbeitet unabhängig von µC- oder FPGA- Funktionalitäten im VCI,
- zyklische Überwachung über das Kommunikations-Modul muss gewährleistet sein,
- CRC-Berechnung im VCI-ASIC gewährleistet sichere Kommunikation (CRC: cyclic redundancy check),
- Watch-Dog VCI ASIC Pin signalisiert CRC Fehler bei SPI Kommunikation oder einen zyklische Monitoringfehler,
- Überwachungsmodul generiert Frage-/Antwortspiel, das vom µC oder FPGA in einem definierten Zeitfenster "richtig" beantwortet werden muss, bspw. über SPI oder eine parallele Schnittstelle.

Im Zusammenspiel mit der Spannungsüberwachung durch das Reset-Handling-Modul stellt das VCI ASIC sicher, dass das gesamte VCI sich immer im sicheren Zustand befindet. Somit ist die Grundlage geschaffen, dass das VCI auch im Fahrbetrieb eines Fahrzeuges betrieben werden kann.

Grundsätzlich werden die wichtigen Schnittstellen-Controller, wie bspw. CAN, K-Line usw., durch den Mikrocontroller unterstützt. Die Schnittstellen-Controller können auch im FPGA implementiert werden.

Figur 7 zeigt mögliche Konfigurationen der Fahrzeugkommunikationsschnittstelle. Eine erste Ausführung 300 umfasst ein FPGA 302 und ein ASIC 304. In dem FPGA 302 sind ein Prozessor 306 und ein oder mehrere Schnittstellen-Controller 308 vorgesehen. Der bzw. die Schnittstellen-Controller 308 kann bzw. können mehrere Schnittstellen, wie bspw. CAN, unterstützen.

Eine zweite Ausführung 320 umfasst eine Recheneinheit 322 mit einem oder mehreren Schnittstellen-Controllern 324 und ein ASIC 326. Eine dritte Ausführung 340 umfasst eine Recheneinheit 342, ein FPGA 344 mit einem oder mehreren Schnittstellen-Controllern 346 und ein ASIC 348.

## Patentansprüche

1. Elektronische Einheit für eine Fahrzeugkommunikationsschnittstelle (12, 30, 300, 320, 340), welche für eine bidirektionale Kommunikation ausgelegt ist, mit einer Schalt-Matrix (46, 72) mit mindestens einem Schalter, der mit einem ersten Pin (120) und einem zweiten Pin (122) verbunden ist, wobei in einer ersten Kommunikationsrichtung (130) der erste Pin (120) sendet und der zweite Pin (122) empfängt und in einer zweiten Kommunikationsrichtung (132) der erste Pin (120) empfängt und der zweite Pin (122) sendet, wobei der mindestens eine Schalter dazu ausgelegt ist, beide Kommunikationsrichtungen (130 und 132) gleichzeitig zu unterbrechen, **dadurch gekennzeichnet, dass** zur Spannungsmessung eine Messschaltung mit einem Analog-Digital-Wandler (202) vorgesehen ist, wobei der Analog-Digital-Wandier (202) hohe Eingangswiderstände aufweist und wobei die elektronische Einheit (32) als integrierter Baustein mit sehr kleinen Leckströmen, nämlich wenigen nA, bei geöffneten oder geschlossenen Schaltern in der Schalt-Matrix (46, 72) ausgebildet ist, um eine Open-Load-Diagnose zu ermöglichen.

2. Elektronische Einheit nach Anspruch 1, bei der wenigstens einer von dem mindestens einen Schalter als leckstromarmer Schalter ausgebildet ist.

3. Elektronische Einheit nach Anspruch 1 oder 2, die als ASIC ausgebildet ist.

4. Elektronische Einheit nach einem der Ansprüche 1 bis 3, bei dem wenigstens einer von dem mindestens einen Schalter der Schalt-Matrix als Back-to- Back-Schalterstruktur (100) ausgebildet ist.

5. Elektronische Einheit nach einem der Ansprüche 1 bis 4, bei der ein Transceiver-Array (44, 74) vorgesehen ist, das als Pegelwandler dient.

6. Elektronische Einheit nach einem der Ansprüche 1 bis 5, bei der eine zusätzliche Recheneinheit (70) vorgesehen ist, die als Master in der elektronischen Einheit dient.

7. Elektronische Einheit nach einem der Ansprüche 1 bis 6, bei der zusätzlich eine weitere Kommunikationsschnittstelle (48) vorgesehen ist, die zur Konfiguration der elektronischen Einheit dient.

8. Elektronische Einheit nach einem der Ansprüche 1 bis 7, bei der zusätzlich ein Modul mit ADC (202) vorgesehen ist, wobei der ADC (202) mit einem Multiplexer zusammenwirkt, um unterschiedliche Fahrzeugbusse ansprechen zu können.

9. Elektronische Einheit nach einem der Ansprüche 1 bis 7, bei der zusätzlich ein Modul mit ADC-Multiplexer (208) vorgesehen ist, um die elektronische Einheit an unterschiedliche Fahrzeugbusse anzupassen.

10. Elektronische Einheit nach einem der Ansprüche 1 bis 9, bei der zusätzlich ein Überwachungsmodul (94) vorgesehen ist zur Kontrolle eines Masters.

11. Elektronische Einheit nach einem der Ansprüche 1 bis 10, bei der zusätzlich eine Spannungsüberwachung (86) vorgesehen ist, die zur Überwachung von externen Spannungen dient.

12. Fahrzeugkommunikationsschnittstelle zum Anschließen an eine Fahrzeugdiagnoseschnittstelle, über die eine Fahrzeugdiagnose durchgeführt werden kann, wobei die Fahrzeugkommunikationsschnittstelle eine elektronische Einheit (32) nach einem der Ansprüche 1 bis 11 umfasst.

## Claims

1. Electronic unit for a vehicle communication interface (12, 30, 300, 320, 340) designed for bidirectional communication, having a switching matrix (46, 72) with at least one switch which is connected to a first pin (120) and to a second pin (122), wherein the first pin (120) transmits and the second pin (122) receives in a first communication direction (130) and the first pin (120) receives and the second pin (122) transmits in a second communication direction (132), wherein the at least one switch is designed to simultaneously interrupt both communication directions (130 and 132), **characterized in that** a measurement circuit having an analogue/digital converter (202) is provided for measuring the voltage, wherein the analogue/digital converter (202) has high input resistances, and wherein the electronic unit (32) is in the form of an integrated module with very low leakage currents, namely a few nA, when the switches in the switching matrix (46, 72) are open or closed, in order to enable an open-load diagnosis.

2. Electronic unit according to Claim 1, in which at least one of the at least one switch is in the form of a switch having a low leakage current.

3. Electronic unit according to Claim 1 or 2, which is in the form of an ASIC.

4. Electronic unit according to one of Claims 1 to 3, in which at least one of the at least one switch in the switching matrix is in the form of a back-to-back switch structure (100).

5. Electronic unit according to one of Claims 1 to 4, in which a transceiver array (44, 74) which is used as a level converter is provided.

6. Electronic unit according to one of Claims 1 to 5, in which an additional computing unit (70) which is used as the master in the electronic unit is provided.

7. Electronic unit according to one of Claims 1 to 6, in which a further communication interface (48) which is used to configure the electronic unit is additionally provided.

8. Electronic unit according to one of Claims 1 to 7, in which a module with an ADC (202) is additionally provided, wherein the ADC (202) interacts with a multiplexer in order to be able to address different vehicle buses.

9. Electronic unit according to one of Claims 1 to 7, in which a module with an ADC multiplexer (208) is additionally provided in order to adapt the electronic unit to different vehicle buses.

10. Electronic unit according to one of Claims 1 to 9, in which a monitoring module (94) is additionally provided for monitoring a master.

11. Electronic unit according to one of Claims 1 to 10, in which a voltage monitoring means (86) which is used to monitor external voltages is additionally provided.

12. Vehicle communication interface for connection to a vehicle diagnostic interface which can be used to carry out a vehicle diagnosis, wherein the vehicle communication interface comprises an electronic unit (32) according to one of Claims 1 to 11.

## Revendications

1. Module électronique destiné à une interface de communication avec un véhicule (12, 30, 300, 320, 340) qui est conçu pour une communication bidirectionnelle, comprenant une matrice de commutation (46, 72) dotée d'au moins un commutateur qui est relié à une première broche (120) et à une seconde broche (122), dans lequel, dans une première direction de communication (130), la première broche (120) émet et la seconde broche (122) reçoit et dans une seconde direction de communication (132), la première broche (120) reçoit et la seconde broche (122) émet, dans lequel ledit au moins un commutateur est conçu pour interrompre simultanément les deux directions de communication (130 et 132), **caractérisé en ce que**, pour mesurer la tension, il est prévu un circuit de mesure doté d'un convertisseur analogique-numérique (202), dans lequel le convertisseur analogique-numérique (202) présente des résistances d'entrée élevées et dans lequel le module électronique (32) est réalisé sous la forme d'un composant intégré à très faibles courants de fuite, à savoir de quelques nA, lorsque les commutateurs de la matrice de commutation (46, 72) sont ouverts ou fermés, afin de permettre un diagnostic en charge ouverte.

2. Module électronique selon la revendication 1, dans lequel au moins l'un dudit au moins un commutateur est réalisé sous la forme d'un commutateur à faible courant de fuite.

3. Module électronique selon la revendication 1 ou 2, qui est réalisé sous la forme d'un ASIC.

4. Module électronique selon l'une des revendications 1 à 3, dans lequel au moins l'un dudit au moins un commutateur de la matrice de commutation est réalisé sous la forme d'une structure de commutation dos à dos (100).

5. Module électronique selon l'une des revendications 1 à 4, dans lequel il est prévu un réseau d'émetteurs-récepteurs (44, 74) qui fait fonction de convertisseur de niveau.

6. Module électronique selon l'une des revendications 1 à 5, dans lequel il est prévu un module de calcul supplémentaire (70) qui fait fonction de maître dans le module électronique.

7. Module électronique selon l'une des revendications 1 à 6, dans lequel il est prévu une interface de communication supplémentaire (48) qui a pour fonction de configurer le module électronique.

8. Module électronique selon l'une des revendications 1 à 7, dans lequel il est en outre prévu un module doté d'un ADC (202), dans lequel l'ADC (202) interagit avec un multiplexeur pour prendre en charge différents bus de véhicule.

9. Module électronique selon l'une des revendications 1 à 7, dans lequel il est en outre prévu un module doté d'un ADC-multiplexeur (208) afin d'adapter le module électronique à différents bus de véhicule.

10. Module électronique selon l'une des revendications 1 à 9, dans lequel il est en outre prévu un module de surveillance (94) destiné à contrôler un maître.

11. Module électronique selon l'une des revendications 1 à 10, dans lequel il est en outre prévu un dispositif de surveillance de tensions (86) qui permet de surveiller des tensions externes.

12. Interface de communication avec un véhicule, destinée à être connectée à une interface de diagnostic du véhicule par le biais de laquelle un diagnostic du véhicule peut être effectué, dans laquelle l'interface de communication avec un véhicule comprend un module électronique (32) selon l'une des revendications 1 à 11.
